# EUROPEAN PATENT SPECIFICATION

(11) **EP 2 775 244 B1**
(45) Date of publication and mention of the grant of the patent: **22.11.2017**
(21) Application number: 14157663.7
(22) Date of filing: 04.03.2014
(51) Int. Cl.: F28D 7/00

(54) **Micro-lattice cross-flow heat exchangers for aircraft**
Mikrogitter-Querstromwärmetauscher für Flugzeuge
Échangeurs thermiques à courants croisés micro-réseau pour aéronef

(30) Priority: 05.03.2013 US 201313785973
(43) Date of publication of application: 10.09.2014
(73) Proprietor: The Boeing Company, Chicago, IL 60606-1596 (US)
(72) Inventor: Kusuda, Charles E, Mukilteo, WA Washington 98275 (US); Roper, Christopher Stephen, Santa Monica, CA California 90403 (US); Vannice, William, Kent, WA Washington 98031 (US); Muley, Arun, San Pedro, CA California 90732 (US); Maloney, Kevin John, Cambridge, CB3 9BB (GB)
(74) Representative: Boult Wade Tennant

(56) References cited:
- WO-A1-2010/061235
- WO-A2-2004/063639
- US-A- 5 667 168
- US-B1- 6 623 687
- US-B1- 7 653 276

## Description

### FIELD

Embodiments of the present disclosure relate generally to heat exchangers. More particularly, embodiments of the present disclosure relate to aircraft heat exchangers. US 5667168 discloses a heat exchanger according to the preamble of claim 8 and a process for operating a heat exchanger according to the preamble of claim 1.

### BACKGROUND

Heat exchangers are used in various thermal management applications such as heating, refrigeration, air conditioning, and in systems which create waste heat such as power stations, chemical plants, and petroleum refineries, and in conglomerations of systems, such as aircraft. A heat exchanger generally transfers heat from one medium to another. The media may be separated to never mix or may be in direct contact. Interface pressure loss may represent a significant component consideration. Generally the rate of heat transfer is proportional to the heat exchanger size. Ongoing research is in part focused on development of efficient heat exchanger systems that are light and small in size.

### SUMMARY

An aircraft micro-lattice cross-flow heat exchanger and methods are presented as defined in claims 8 and 1, respectively. A first aircraft fluid source inlet provides a first fluid from a first aircraft system, and a second aircraft fluid source inlet provides a second fluid from a second aircraft system. A structural body supports aviation induced structural loads and exchanges heat between the first fluid and the second fluid. The structural body comprises hollow channels forming two interpenetrating fluidically isolated volumes that flow the first fluid within the hollow channels and flow the second fluid external to the hollow channels isolated from the first fluid. The hollow channels comprise a hollow three-dimensional micro-truss comprising hollow truss elements extending along at least three directions, and hollow nodes interpenetrated by the hollow truss elements.

In this manner, embodiments of the disclosure provide a heat exchanger that also bears structural loads such as system pressures. The heat exchanger comprises enclosed fluid flow interfaces to a hollow porous material that reduce discontinuities and sharp edges and consequently reduce flow disruptions, reduce pressure drops for fluid flowing into the hollow porous material, and/or increases pressure recovery for fluid exiting the hollow porous material. According to the invention, a method for operating a micro-lattice cross-flow heat exchanger for an aircraft receives a first fluid in a first aircraft fluid source inlet from a first aircraft system, and receives a second fluid in a second aircraft fluid source inlet from a second aircraft system. The method further supports an aviation structural load on a structural body forming two interpenetrating fluidically isolated volumes and comprising hollow channels comprising hollow truss elements within a hollow three-dimensional micro-truss. The hollow three-dimensional micro-truss comprises hollow truss elements extending along at least three directions, and a plurality of hollow nodes interpenetrated by the hollow truss elements. The method further flows the first fluid from the first aircraft fluid source inlet into the hollow channels through a first manifold comprising first openings into the hollow channels. The method further flows the first fluid within the hollow channels, and flows the first fluid out of a second manifold comprising second openings from the hollow channels. The method further flows the second fluid external to the hollow channels and transfers heat between the first fluid flow and the second fluid flow via the structural body. According to the invention, a micro-lattice cross-flow heat exchanger for an aircraft comprises a first aircraft fluid source inlet, a second aircraft fluid source inlet, and a structural body. The first aircraft fluid source inlet provides a first fluid from a first aircraft system, and the second aircraft fluid source inlet provides a second fluid from a second aircraft system. The structural body supports aviation induced structural loads and exchanges heat between the first fluid and the second fluid. The structural body comprises hollow channels that form two interpenetrating fluidically isolated volumes configured to flow the first fluid within the hollow channels and flow the second fluid external to the hollow channels and isolated from the first fluid. The hollow channels comprising a hollow three-dimensional micro-truss. The hollow three-dimensional micro-truss comprises hollow truss elements extending along at least three directions, and hollow nodes interpenetrated by the hollow truss elements.

In a further embodiment, a method for configuring a micro-lattice cross-flow heat exchanger for an aircraft configures a first aircraft fluid source inlet to receive a first fluid from a first aircraft system. The method further configures a second aircraft fluid source inlet to receive a second fluid from a second aircraft system. The method further configures hollow channels comprising hollow truss elements into a structural body comprising a hollow three-dimensional micro-truss forming two interpenetrating fluidically isolated volumes operable for the first fluid to flow within the hollow channels and the second fluid to flow external to the hollow channels isolated from the first fluid. The method further configures first hollow truss elements from among the hollow truss elements to extend along a first direction, and configures second hollow truss elements from among the hollow truss elements to extend along a second direction. The method further configures third hollow truss elements from among the hollow truss elements to extend along a third direction, and interpenetrates hollow nodes by the hollow truss elements. The method further configures the structural body to exchange heat between the first fluid and the second fluid, and configures the structural body to support aviation induced structural loads.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF DRAWINGS

A more complete understanding of embodiments of the present disclosure may be derived by referring to the detailed description and claims when considered in conjunction with the following figures, wherein like reference numbers refer to similar elements throughout the figures. The figures are provided to facilitate understanding of the disclosure without limiting the breadth, scope, scale, or applicability of the disclosure. The drawings are not necessarily made to scale.
Figure 1 is an illustration of a flow diagram of an exemplary aircraft production and service methodology.
Figure 2 is an illustration of an exemplary block diagram of an aircraft.
Figure 3 is an illustration of an exemplary micro-lattice cross-flow heat exchanger according to an embodiment of the disclosure.
Figure 4 is an illustration of an expanded view of an exemplary micro-lattice cross-flow heat exchanger showing hollow channels entering and leaving hollow nodes according to an embodiment of the disclosure.
Figure 5 is an illustration of an exemplary schematic of a micro-lattice cross-flow heat exchanger according to an embodiment of the disclosure.
Figure 6 is an illustration of an exemplary flowchart showing a process for configuring micro-lattice cross-flow heat exchanger for an aircraft according to an embodiment of the disclosure.
Figure 7 is an illustration of an exemplary flowchart showing a process for operating a micro-lattice cross-flow heat exchanger for an aircraft according to an embodiment of the disclosure.
Figure 8 is an illustration of an exemplary schematic of a micro-lattice cross-flow heat exchanger comprising a heat pipe according to an embodiment of the disclosure.
Figure 9 is an illustration of an exemplary schematic of a micro-lattice cross-flow heat exchanger comprising a heat pipe according to an embodiment of the disclosure.

### DETAILED DESCRIPTION

The following detailed description is exemplary in nature and is not intended to limit the disclosure or the application and uses of the embodiments of the disclosure. Descriptions of specific devices, techniques, and applications are provided only as examples. Modifications to the examples described herein will be readily apparent to those of ordinary skill in the art, and the general principles defined herein may be applied to other examples and applications without departing from the spirit and scope of the disclosure. Furthermore, there is no intention to be bound by any expressed or implied theory presented in the preceding field, background, summary or the following detailed description. The present disclosure should be accorded scope consistent with the claims, and not limited to the examples described and shown herein.

Embodiments of the disclosure may be described herein in terms of functional and/or logical block components and various processing steps. It should be appreciated that such block components may be realized by any number of hardware, software, and/or firmware components configured to perform the specified functions. For the sake of brevity, conventional techniques and components related to aircraft, aircraft components, heat exchangers, fluid dynamics, and other functional aspects of the systems (and the individual operating components of the systems) may not be described in detail herein. In addition, those skilled in the art will appreciate that embodiments of the present disclosure may be practiced in conjunction with a variety of structural bodies, and that the embodiments described herein are merely example embodiments of the disclosure.

Embodiments of the disclosure are described herein in the context of some non-limiting applications, namely, an air conditioning heat exchanger. Embodiments of the disclosure, however, are not limited to such air conditioning applications, and the techniques described herein may also be utilized in other applications. For example, embodiments may be applicable to electronics cooling, battery cooling, liquid-liquid heat exchange, gas-liquid heat exchange, slurry-liquid heat exchange (e.g., slush hydrogen to liquid nitrogen), slurry-gas heat exchange, fuel-coolant heat exchange, Synergistic Air-Breathing Rocket Engines (SABRE), engine precoolers, engine oil coolers, hypersonic precoolers, intercoolers, hydraulic fluid heat exchangers, refrigeration heat exchangers, or other heat exchange applications.

As would be apparent to one of ordinary skill in the art after reading this description, the following are examples and embodiments of the disclosure and are not limited to operating in accordance with these examples. Other embodiments may be utilized and structural changes may be made without departing from the scope of the exemplary embodiments of the present disclosure.

Embodiments provide a lightweight, high-performance cross-flow micro-lattice heat exchanger structure for an aircraft, including air to air, liquid to liquid, and liquid to air heat transfer in both single and two-phase flow. Embodiments use a hollow micro-lattice structure as a core structure in the micro-lattice heat exchanger structure for particular applications. A fluid stream is passed through hollow tubes comprising the hollow micro-lattice structure. Another fluid stream passes around the hollow micro-lattice structure. This fluid passage mechanism permits transfer of heat between the two fluid streams without mixing the two fluids. The hollow micro-lattice structure is well-suited for use in multiple places on an aircraft where high heat transfer between two fluid streams, low fluid pressure drop, low mass and low volume is desirable. For example, the micro-lattice heat-exchanger structure may be used to transfer heat from compressed air stream to a RAM air stream, thus providing a source of cabin air at the proper temperature and pressure for passenger comfort.

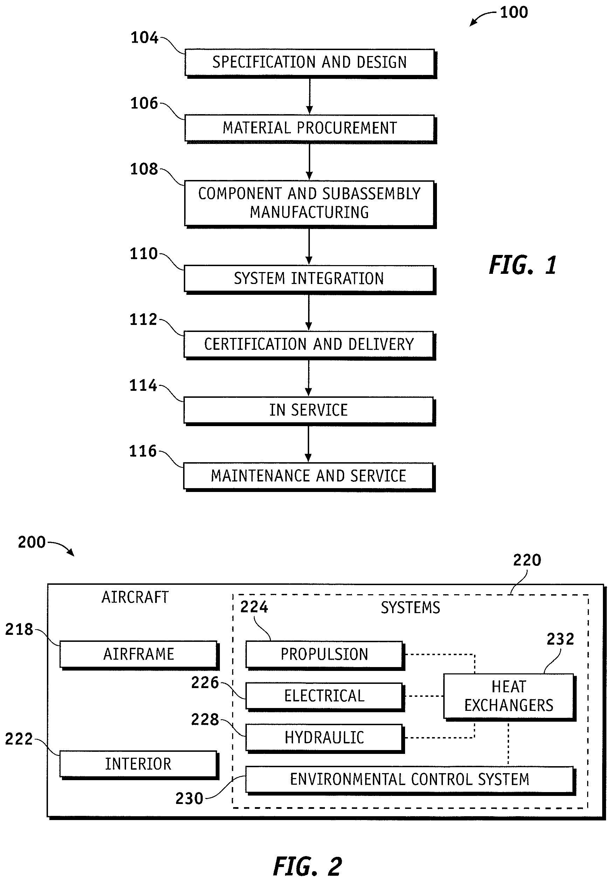

Referring more particularly to the drawings, embodiments of the disclosure may be described in the context of an exemplary aircraft manufacturing and service method 100 (method 100) as shown in Figure 1 and an aircraft 200 as shown in Figure 2. During pre-production, the method 100 may comprise specification and design 104 of the aircraft 200, and material procurement 106. During production, component and subassembly manufacturing 108 (process 108) and system integration 110 of the aircraft 200 takes place. Thereafter, the aircraft 200 may go through certification and delivery 112 in order to be placed in service 114. While in service by a customer, the aircraft 200 is scheduled for routine maintenance and service 116 (which may also comprise modification, reconfiguration, refurbishment, and so on).

Each of the processes of method 100 may be performed or carried out by a system integrator, a third party, and/or an operator (e.g., a customer). For the purposes of this description, a system integrator may comprise, for example but without limitation, any number of aircraft manufacturers and major-system subcontractors; a third party may comprise, for example but without limitation, any number of vendors, subcontractors, and suppliers; and an operator may comprise, for example but without limitation, an airline, leasing company, military entity, service organization; and the like.

As shown in Figure 2, the aircraft 200 produced by the method 100 may comprise an airframe 218 with a plurality of systems 220 and an interior 222. Examples of high-level systems of the systems 220 comprise one or more of a propulsion system 224, an electrical system 226, a hydraulic system 228, an environmental control system 230, and one or more heat exchanger systems 232. The one or more heat exchanger systems 232 may be contained in the airframe 218, the interior 222, the systems 220 such as the propulsion system 224, the electrical system 226, the hydraulic system 228, and the environmental control system 230 or any system of the aircraft 200. Any number of other systems may also be included. Although an aerospace example is shown, the embodiments of the disclosure may be applied to other industries.

It should not be inferred from Figure 2 that an airplane comprises a single, thermal management or, heat exchanger system that manages waste heat from multiple systems. Rather, each system generally comprises one or more heat exchangers to manage waste heat produced by its components.

Apparatus and methods embodied herein may be employed during any one or more of the stages of the method 100. For example, components or subassemblies corresponding to production of the process 108 may be fabricated or manufactured in a manner similar to components or subassemblies produced while the aircraft 200 is in service. In addition, one or more apparatus embodiments, method embodiments, or a combination thereof may be utilized during production stages of the process 108 and the system integration 110, for example, by substantially expediting assembly of or reducing the cost of an aircraft 200. Similarly, one or more of apparatus embodiments, method embodiments, or a combination thereof may be utilized while the aircraft 200 is in service, for example and without limitation, to maintenance and service 116.

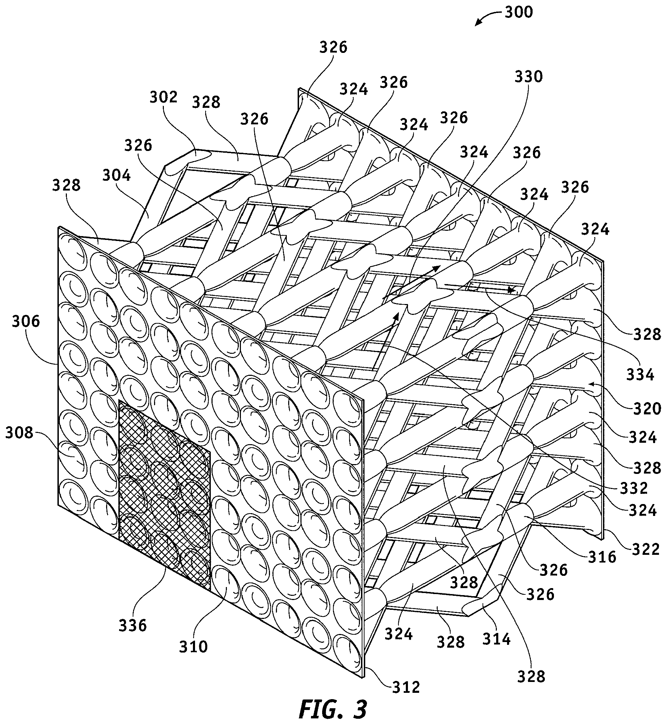

Figure 3 is an illustration of an exemplary micro-lattice cross-flow heat exchanger 300 according to an embodiment of the disclosure. The micro-lattice cross-flow heat exchanger 300 may comprise a structural body 320, a manifold 306/322, and a plurality of hollow nodes 302/314.

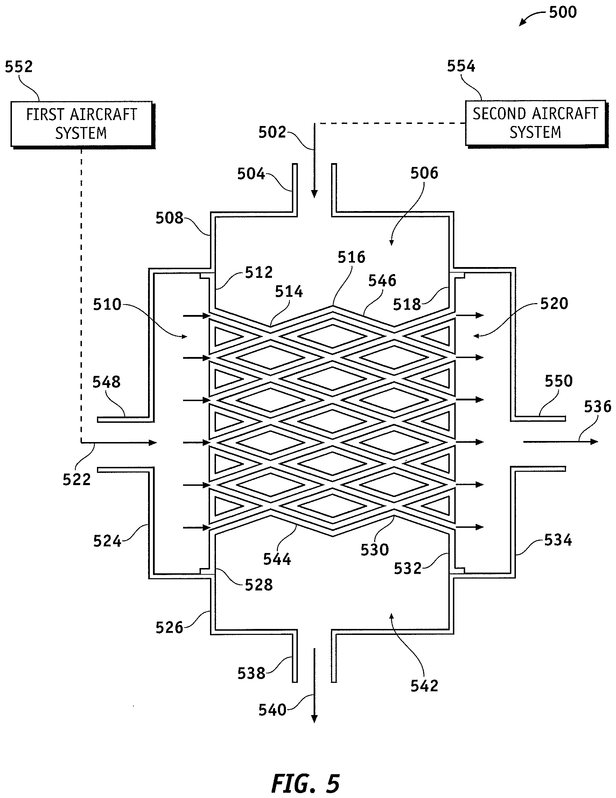

The structural body 320 comprises a plurality of hollow channels 304/316 configured to flow a first fluid 522 (Figure 5) within the hollow channels 304/316 and a second fluid 502 (Figure 5) external to the hollow channels 304/316.

In one embodiment, the hollow channels 304/316 may be a polymer micro-truss structure in a form of a regular hollow three-dimensional micro-truss of intersecting tubes, configured with hollow nodes 302/314 at the intersections of the hollow channels 304/316, so that an interior of each of the hollow channels 304/316 is in communication with any other hollow channels 304/316 it intersects. The hollow channels 304/316 comprise hollow truss elements within a hollow three-dimensional micro-truss comprising: first hollow truss elements 324 extending along a first direction 330, second truss hollow truss elements 326 extending along a second direction 332, third truss hollow truss elements 328 extending along a third direction 334.

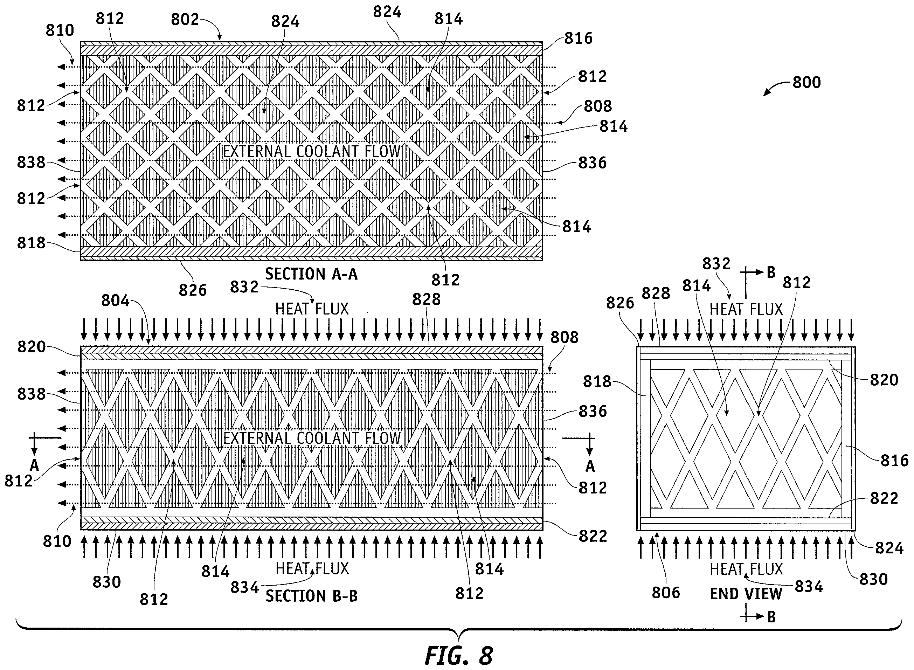

The hollow channels 304/316 may comprise, for example but without limitation, a cross-sectional shape that can be elliptical, circular, square, triangular, octagonal, star-shaped, a combination thereof, or other shape. Large aspect ratio elliptical shapes may improve heat transfer, and orientation of an ellipse's major axis may enhance heat transfer and enable better control of a pressure drop incurred by flow of the second fluid. In some embodiments, the hollow channels 304/316 may comprise, for example but without limitation, one or more heat pipes 800 (Figure 8).

Access to an interior fluid volume, formed by connected interiors of the hollow channels 304/316, may be provided by an architected fluid interface, which may also be referred to as a manifold such as the manifold 306/322, at each end of the structural body 320.

The manifold 306/322 is coupled to a first surface 512 and a second surface 518 (Figure 5) of the structural body 320 respectively. The manifold 306/322 each comprises a plurality of openings 308/310 into the hollow channels 304/316. A cross section (e.g., lateral, longitudinal, or other cross section) of each of the openings 308/310 may comprise, for example but without limitation, a tapered shape (e.g., for a longitudinal cross section), a polygon shape, quadrilateral shape, a cross-section of a hollow pyramid (e.g., for a lateral or longitudinal cross section), or other cross section configuration. The openings 308/310 can be protruding or square-edged, or to reduce pressure drop incurred by the first flow, the openings can be radiused or tapered. The manifold 306/322 may comprise a particulate filter 336. The particulate filter 336 may be used to decrease a head loss coefficient of a flow encountering the openings 308/310.

Each of the hollow channels 304/316 that is at a surface such as the first surface 512 or the second surface 518 where a manifold 306/322 is placed comprises an opening such as the openings 308/310, but some tube segments of the hollow channels 304/316 may connect two nodes instead of one node and one opening or, as illustrated in Figure 3, into groups of hollow channels 304/316. In the embodiment illustrated in Figure 3, the openings 308/310 may be in a form of a funnel or hollow pyramid, with a depth approximately or substantially equal to one half of the length, in a direction of a bore of the funnel, of a unit cell of the hollow three-dimensional micro-truss of hollow channels 304/316.

Smooth transitions using the openings 308/310 shaped as described above (e.g., tapered etc.), at an interface between a bulk fluid and a hollow porous material such as the hollow channels 304/316 may result in significantly lower pressure drop for a fluid flowing into the hollow channels 304/316 and higher pressure recovery for a fluid exiting from the hollow channels 304/316 than manifolds having a flat surface with a flush hole for each hollow channels 304/316. In particular, a head loss coefficient of a flow encountering a right-angle inlet is approximately 0.5, while the head loss coefficient for a filleted inlet is as low as 0.04, representing an improvement of 12.5 times.

The hollow nodes 302/314 comprise locations at which the hollow channels 304/316 interpenetrate.

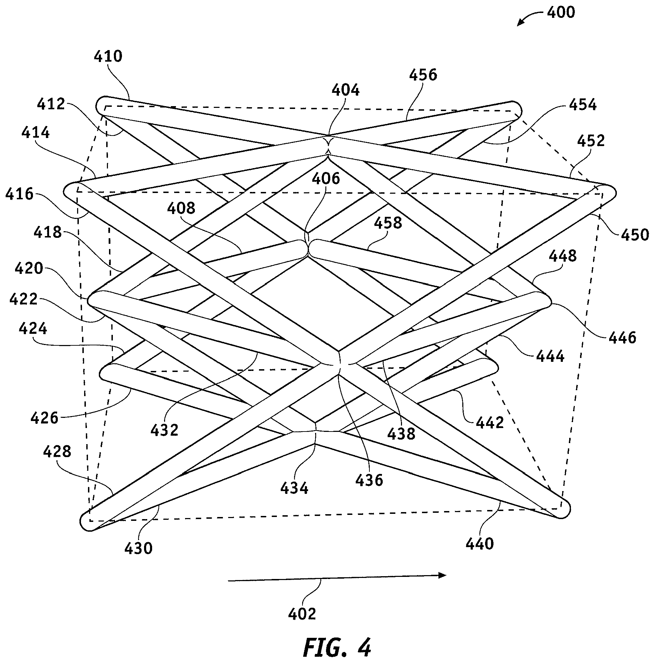

Figure 4 is an illustration of an expanded view 400 of an exemplary micro-lattice cross-flow heat exchanger 300 showing hollow channels entering and leaving hollow nodes according to an embodiment of the disclosure. For example but without limitation, hollow nodes 404, 406, 420, 434 and 446 comprise various configurations for flow of a fluid in the direction 402. Hollow node 404 is interpenetrated by hollow truss elements 410, 414 and 418 bringing fluid into the hollow node 404, and by hollow truss elements 448, 452 and 456 receiving fluid from the hollow node 404. Hollow node 406 is interpenetrated by hollow truss elements 408, 412 and 424 bringing fluid into the hollow node 406, and by hollow elements 454, 458 and 460 receiving fluid from the hollow node 406. Hollow node 420 is interpenetrated by hollow truss elements (not shown) bringing fluid into the hollow node 420, and by hollow truss elements 408, 418, 422 and 432 receiving fluid from the hollow node 420. Hollow node 434 is interpenetrated by hollow truss elements 422, 426 and 430 bringing fluid into the hollow node 434, and by hollow truss elements 440, 442 and 444 receiving fluid from the hollow node 434. Node 446 is interpenetrated by hollow truss elements 438, 444, 448 and 458 bringing fluid into the hollow node 446, and by hollow elements (not shown) receiving fluid from the hollow node 446.

Figure 5 is an illustration of an exemplary schematic of a micro-lattice cross-flow heat exchanger 500 according to an embodiment of the disclosure. The micro-lattice cross-flow heat exchanger 500 may comprise a structural body 514 (320 in Figure 3), a first input manifold 524, a first output manifold 534, a second input manifold 508, and a second output manifold 526.

The first fluid 522 is flowed into the first input manifold 524 coupled to a surface 512 of the structural body 514. The structural body 514 is configured for the first fluid 522 to flow into and within a plurality of hollow channels 546/544 (302/314 in Figure 3). The structural body 514 comprises a plurality of hollow nodes 516/530 (302/314 in Figure 3) at which the hollow channels 546/544 interpenetrate. The first input manifold 524 and the first output manifold 534 comprise a plurality of openings 308/310 (see Figure 3) into the hollow channels 546/544. The first fluid 522 transfers heat to/from the structural body 514 and exits the first output manifold 534 as a first heat changed fluid 536.

The second fluid 502 is flowed into the second input manifold 508 around and external to the hollow channels 546/544. The second fluid 502 transfers heat from/to the structural body 514 and exits the second output manifold 526 as a second heat changed fluid 540. Thereby, heat is transferred between the first fluid 522 and the second fluid 502 via the structural body 514.

In one embodiment, a first aircraft fluid source inlet 548 is configured to provide a first fluid 522 from a first aircraft system 552. A second aircraft fluid source inlet 504 is configured to provide a second fluid 502 from a second aircraft system 554. The structural body 320/514 is configured to support aviation induced structural loads and exchange heat between the first fluid 522 and the second fluid 502. The aviation induced structural loads may comprise, for example but without limitation, a proof and burst load, an air pressure cycling load, a vibration load, an inertial load, a thermal cycling load, an airframe structural support load, a wing fairing bending load, a combination thereof, an/or other aviation structural load.

The structural body 320/514 comprises a plurality of the hollow channels 546/544 forming two interpenetrating fluidically isolated volumes and configured for flow of the first fluid 522 within the hollow channels 546/544 and flow of the second fluid 502 external to the hollow channels 546/544 isolated from the first fluid 522. The hollow channels 546/544 comprise a hollow three-dimensional micro-truss such as the micro-lattice cross-flow heat exchanger 300/500 comprising hollow truss elements extending along at least three directions, and a plurality of hollow nodes interpenetrated by the hollow truss elements as explained above.

The micro-lattice cross-flow heat exchanger 300/500 may be used in, for example but without limitation, an aircraft nitrogen enriched air cooler, a power electronics cooler, a precooler, an air conditioning pack heat exchanger, an oil cooler, a refrigeration condenser, an evaporator exchanging heat between hot and cold refrigerant and air, a hydraulic fluid heat exchanger exchanging heat between hydraulic fluid and fuel or ram air, a liquid cooling system heat exchanger which exchanges heat between liquid coolant and ram air, and other heat exchange application.

The first fluid 522 and the second fluid 502 may comprise, for example but without limitation, an aircraft engine bleed air, an aircraft RAM ambient air, an aircraft nitrogen enriched air cooler, a recycled aircraft cabin air, a fanned heated air from a heat generating component on an aircraft, a pumped aircraft engine oil, a pumped aircraft hydraulic oil, a pumped aircraft gearbox oil, a pumped aircraft liquid coolant, a pumped aircraft refrigerant fluid, a vaporized fluid from a heat pipe, and other fluidic source.

In one embodiment, the micro-lattice cross-flow heat exchanger 500 may use engine bleed air as one fluid (first fluid) and engine fan air as the other fluid (second fluid). This embodiment may be used as a pre-cooler for an aircraft cabin air conditioning and temperature control system.

In another embodiment, the micro-lattice cross-flow heat exchanger 500 may use compressed air (e.g., engine bleed air) as one fluid (first fluid) and ambient (ram) air as the other fluid (second fluid). This embodiment may be used for the aircraft cabin air conditioning and temperature control system.

In a further embodiment, the micro-lattice cross-flow heat exchanger 500 may use compressed air (e.g., engine bleed air) as one fluid (first fluid) and refrigerant as the other fluid (second fluid). This application is a subset of an air conditioning and temperature control system of the aircraft cabin.

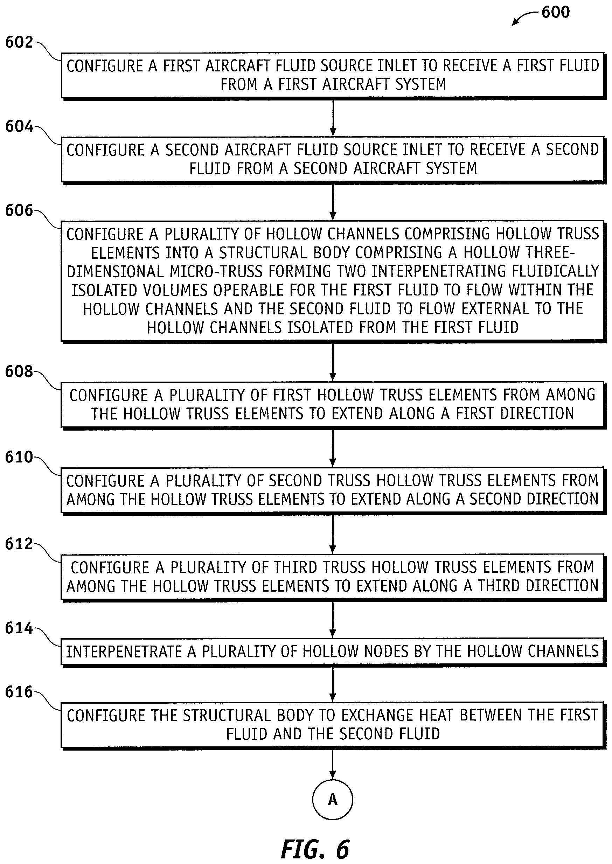

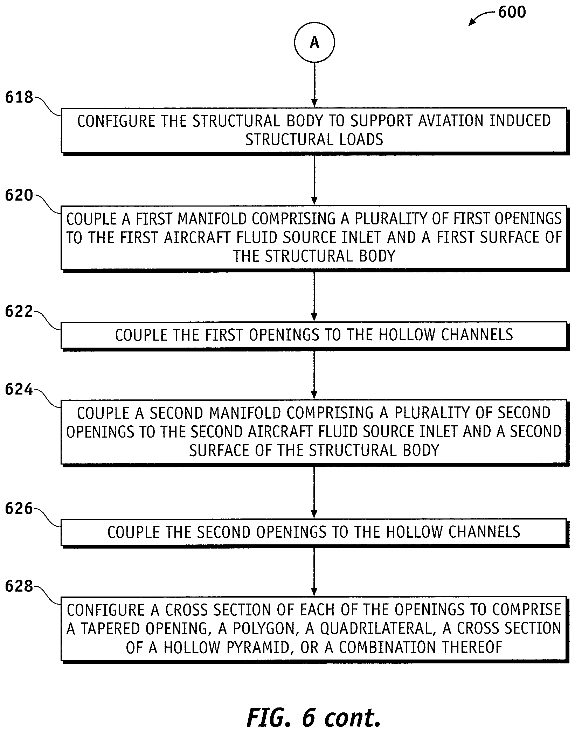

Figure 6 is an illustration of an exemplary flowchart showing a process 600 for configuring a micro-lattice cross-flow heat exchanger for an aircraft according to an embodiment of the disclosure. The various tasks performed in connection with process 600 may be performed mechanically, by software, hardware, firmware, or any combination thereof. For illustrative purposes, the following description of process 600 may refer to elements mentioned above in connection with Figures 1-5. In some embodiments, portions of the process 600 may be performed by different elements of the micro-lattice cross-flow heat exchanger 300/500 such as the structural body 320/514, the manifold 306/322, the hollow channels 304/316, the hollow nodes 302/314, the first aircraft system 552, the second aircraft system 554, etc. Process 600 may have functions, material, and structures that are similar to the embodiments shown in Figures 1-4. Therefore common features, functions, and elements may not be redundantly described here.

Process 600 may begin by configuring a first aircraft fluid source inlet to receive a first fluid from a first aircraft system (task 602).

Process 600 may continue by configuring a second aircraft fluid source inlet to receive a second fluid from a second aircraft system (task 604).

Process 600 may continue by configuring a plurality of hollow channels comprising hollow truss elements into a structural body comprising a hollow three-dimensional micro-truss forming two interpenetrating fluidically isolated volumes operable for the first fluid to flow within the hollow channels and the second fluid to flow external to the hollow channels isolated from the first fluid (task 606).

Process 600 may continue by configuring a plurality of first hollow truss elements from among the hollow truss elements to extend along a first direction (task 608).

Process 600 may continue by configuring a plurality of second truss hollow truss elements from among the hollow truss elements to extend along a second direction (task 610).

Process 600 may continue by configuring a plurality of third truss hollow truss elements from among the hollow truss elements to extend along a third direction (task 612).

Process 600 may continue by interpenetrating a plurality of hollow nodes by the hollow channels (task 614).

Process 600 may continue by configuring the structural body to exchange heat between the first fluid and the second fluid (task 616).

Process 600 may continue by configuring the structural body to support aviation induced structural loads (task 618).

Process 600 may continue by coupling a first manifold comprising a plurality of first openings to the first aircraft fluid source inlet and a first surface of the structural body (task 620).

Process 600 may continue by coupling the first openings to the hollow channels (task 622).

Process 600 may continue by coupling a second manifold comprising a plurality of second openings to the second aircraft fluid source inlet and a second surface of the structural body (task 624).

Process 600 may continue by coupling the second openings to the hollow channels (task 626).

Process 600 may continue by configuring a cross section (e.g., lateral, longitudinal, or other cross section) of each of the openings to comprise a tapered opening, a polygon, a quadrilateral, a cross section of a hollow pyramid, or a combination thereof (task 628).

A process of forming a hollow porous material such as the hollow channels 304/316 into the structural body 320 is described in U.S. patent 7,653,276.

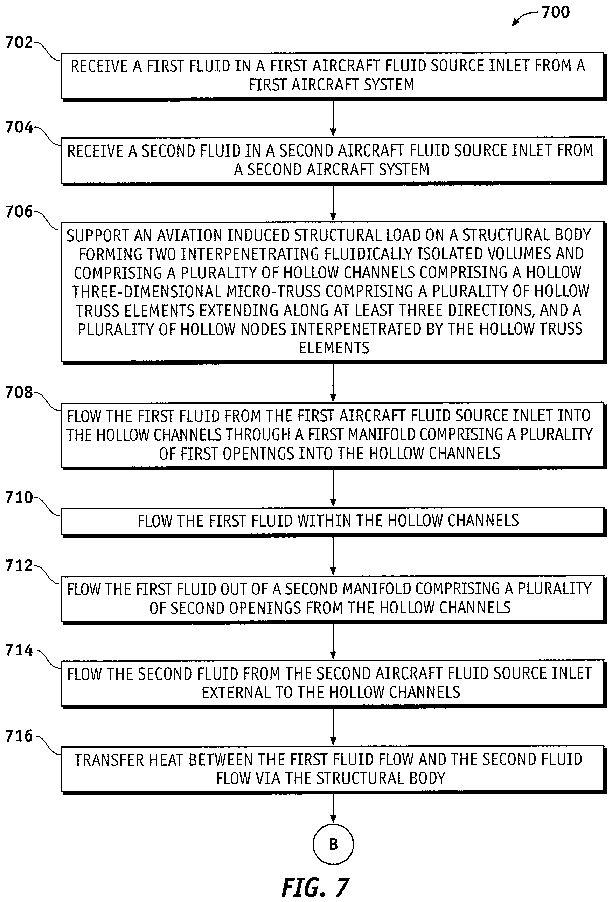

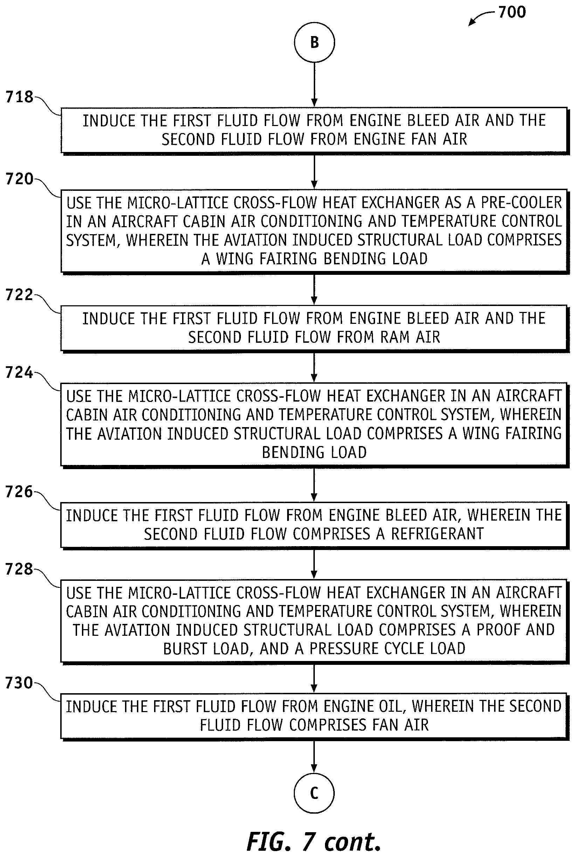

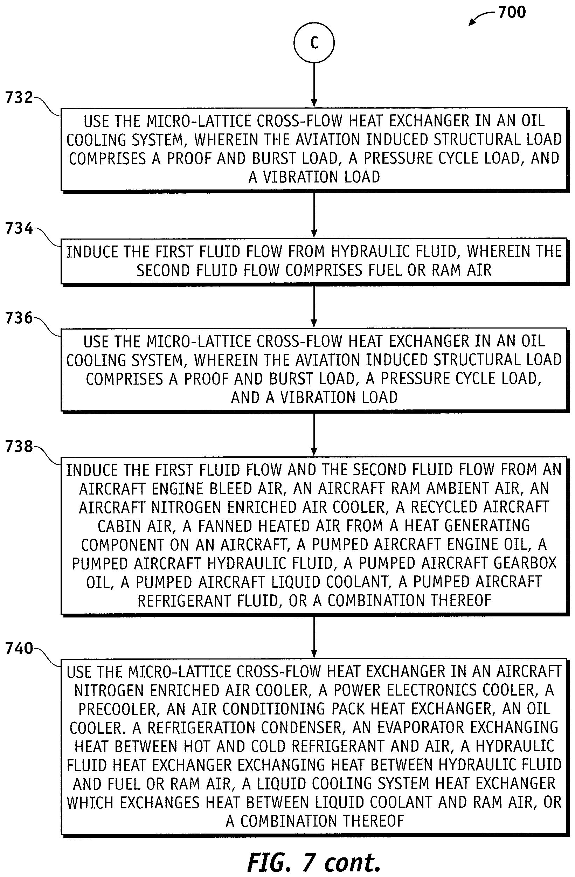

Figure 7 is an illustration of an exemplary flowchart showing a process for operating a micro-lattice cross-flow heat exchanger for an aircraft according to an embodiment of the disclosure. The various tasks performed in connection with process 700 may be performed mechanically, by software, hardware, firmware, or any combination thereof. For illustrative purposes, the following description of process 700 may refer to elements mentioned above in connection with Figures 1-4. In some embodiments, portions of the process 700 may be performed by different elements of the micro-lattice cross-flow heat exchanger 300/400 such as the structural body 320/514, the manifold 306/322, the hollow channels 304/316, the hollow nodes 302/314, the first aircraft system 552, the second aircraft system 554, etc. Process 700 may have functions, material, and structures that are similar to the embodiments shown in Figures 1-4. Therefore common features, functions, and elements may not be redundantly described here.

Process 700 may begin by receiving a first fluid in a first aircraft fluid source inlet from a first aircraft system (task 702).

Process 700 may continue receiving a second fluid in a second aircraft fluid source inlet from a second aircraft system (task 704).

Process 700 may continue by supporting an aviation structural load on a structural body forming two interpenetrating fluidically isolated volumes and comprising a plurality of hollow channels comprising a hollow three-dimensional micro-truss comprising a plurality of hollow truss elements extending along at least three directions, and a plurality of hollow nodes interpenetrated by the hollow truss elements (task 706).

Process 700 may continue by flowing the first fluid from the first aircraft fluid source inlet into the hollow channels through a first manifold comprising a plurality of first openings into the hollow channels (task 708).

Process 700 may continue by flowing the first fluid within the hollow channels (task 710).

Process 700 may continue by flowing the first fluid out of a second manifold comprising a plurality of second openings from the hollow channels (task 712).

Process 700 may continue by flowing the second fluid from the second aircraft fluid source inlet external to the hollow channels (task 714).

Process 700 may continue by transferring heat between the first fluid flow and the second fluid flow via the structural body (task 716).

Process 700 may continue by inducing the first fluid flow from engine bleed air and the second fluid flow from engine fan air (task 718).

Process 700 may continue by using the micro-lattice cross-flow heat exchanger in an aircraft cabin air conditioning and temperature control system, wherein the aviation structural load comprises a wing fairing bending load (task 720).

Process 700 may continue by inducing the first fluid flow from engine bleed air and the second fluid flow from ram air (task 722).

Process 700 may continue by using the micro-lattice cross-flow heat exchanger in an aircraft cabin air conditioning and temperature control system, wherein the aviation structural load comprises a wing fairing bending load (task 724).

Process 700 may continue by inducing the first fluid flow from engine bleed air, wherein the second fluid flow comprises a refrigerant (task 726). The refrigerant may comprise, for example but without limitation, FREON ®, FREON ® replacements (e.g., R134a), water, chlorofluorocarbons, ram air, fan air, or other refrigerant.

Process 700 may continue by using the micro-lattice cross-flow heat exchanger in an aircraft cabin air conditioning and temperature control system, wherein the aviation structural load comprises a proof and burst load, and a pressure cycle load (task 728).

Process 700 may continue by inducing the first fluid flow from engine oil, wherein the second fluid flow comprises fan air (task 730).

Process 700 may continue by using the micro-lattice cross-flow heat exchanger in an oil cooling system, wherein the aviation structural load comprises a proof and burst load, a pressure cycle load, and a vibration load (task 732).

Process 700 may continue by inducing the first fluid flow from hydraulic fluid, wherein the second fluid flow comprises fuel or ram air (task 734).

Process 700 may continue by using the micro-lattice cross-flow heat exchanger in an oil cooling system, wherein the aviation structural load comprises a proof and burst load, a pressure cycle load, and a vibration load (task 736).

Process 700 may continue by inducing the first fluid flow and the second fluid flow from an aircraft engine bleed air, an aircraft RAM ambient air, an aircraft nitrogen enriched air cooler, a recycled aircraft cabin air, a fanned heated air from a heat generating component on an aircraft, a pumped aircraft engine oil, a pumped aircraft hydraulic fluid, a pumped aircraft gearbox oil, a pumped aircraft liquid coolant, and a pumped aircraft refrigerant fluid, or a combination thereof (task 738).

Process 700 may continue by using the micro-lattice cross-flow heat exchanger in an aircraft nitrogen enriched air cooler, a power electronics cooler, a precooler, an air conditioning pack heat exchanger, an oil cooler, a refrigeration condenser, an evaporator exchanging heat between hot and cold refrigerant and air, a hydraulic fluid heat exchanger exchanging heat between hydraulic fluid and fuel or ram air, a liquid cooling system heat exchanger which exchanges heat between liquid coolant and ram air, or a combination thereof (task 740).

Figure 8 is an illustration of an end view 806, a section A-A view 802, and a section B-B view 804 of an exemplary schematic of a micro-lattice cross-flow heat exchanger 800 (heat pipe 800) according to an embodiment of the disclosure. The micro-lattice cross-flow heat exchanger 800 comprises a heat pipe configuration, thus the micro-lattice cross-flow heat exchanger 800 and the heat pipe 800 may be used interchangeably in this document. The micro-lattice cross-flow heat exchanger 800 may comprise a micro-truss structural body 812 (320/514 in Figures 3 and 5) comprising the hollow channels 304/316/546/544 (Figures 3 and 5). The heat pipe 800 may comprise, for example, a 2-sided heat pipe interconnected by the micro-truss structural body 812. The micro-truss structural body 812 functions as a condenser for a heat pipe fluid (not shown) within the micro-truss structural body 812 that is vaporized at sides 828/830 that are exposed to a heat load(flux) 832/834 respectively. The heat pipe fluid of the heat pipe 800 may comprise, for example but without limitation, water, Freon, a hydrocarbon, an ionic liquid, or other fluid.

Each side 824/826/828/830 of the micro-lattice cross-flow heat exchanger 800 comprises a wick structure 816/818/820/822 respectively. The wick structure 816/818/820/822 may be configured on a subset of the sides 824/826/828/830 such as, but without limitation, all of the sides 824/826/828/830, three sides among the sides 824/826/828/830, a single side among the sides 824/826/828/830, or other configuration. In some embodiments, a laterally oriented wick structure in all adjacent four of the sides 824/826/828/830 provide return paths of condensed fluid back to a hot spot on one or more of the sides 824/826/828/830. In various embodiments, the wick structure 816/818/820/822 may comprise, for example but without limitation, a longitudinally oriented wick structure, a laterally oriented wick structure, an omni-directionally oriented wick structure, or other wick structure.

In some embodiments, a cooling fluid 808 enters a first side 836 of the micro-lattice cross-flow heat exchanger 800 and flows through and around an exterior 814 of the micro-truss structural body 812. The cooling fluid 808 may exit a second side 838 of the micro-lattice cross-flow heat exchanger 800.

Heat applied to any area of the sides 824/826/828/830 of the micro-lattice cross-flow heat exchanger 800 results in the heat pipe fluid evaporating from point(s) of exposure and a vapor of the heat pipe fluid migrating into the hollow channels 304/316 (Figure 3) of the micro-truss structural body 812 in closest proximity to the point(s) of exposure. A flow of the cooling fluid 808 through and around the exterior 814 of the micro-truss structural body 812 then absorbs heat from the vapor of the heat pipe fluid and causes it to condense to a condensed refrigerant. The condensed refrigerant flows through the micro-truss structural body 812 (e.g., guided by gravity) to the wick structure 816/818/820/822 in a lowest of the sides 824/826/828/830. Capillary action in the wick structure 816/818/820/822 then guides the condensed refrigerant back to the hot spot, where the cycle begins again.

In an embodiment, the first aircraft system 552 comprises a heat pipe surface (not shown) operable to vaporize the heat pipe fluid in response to heating of the heat pipe surface to provide the vaporized heat pipe fluid.

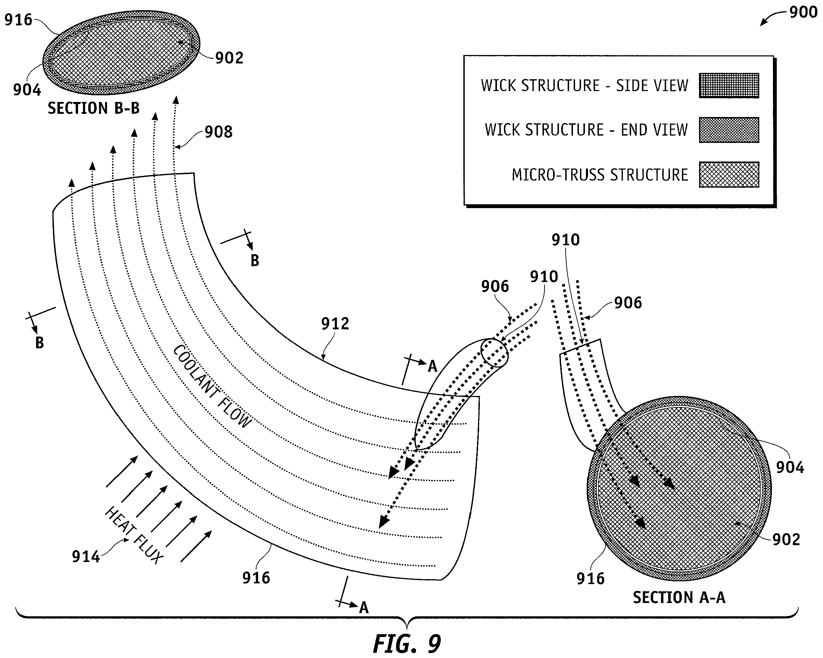

Figure 9 is an illustration of an end view, a section A-A view, and a section B-B view of an exemplary schematic of a micro-lattice cross-flow heat exchanger 900 comprising a heat pipe configuration according to an embodiment of the disclosure. The micro-lattice cross-flow heat exchanger 900 may comprise various cross-section shape configurations of a flow body 912 such as, but without limitation, circles, ellipses, triangles, pentagons, polygons, variable cross-sections along their lengths, or a combination thereof. A surface 916 of the micro-lattice cross-flow heat exchanger 900 absorbs a heat flux 914. The micro-lattice cross-flow heat exchanger 900 comprises longitudinal and lateral wick structures 904, and a hollow micro-truss structure 902 occupies a center of the micro-lattice cross-flow heat exchanger 900.

A cooling fluid 908 enters the micro-lattice cross-flow heat exchanger 900 through a coolant inlet 906 and flows through and around an exterior of the hollow micro-truss structure 902. The cooling fluid 908 absorbs heat from the hollow micro-truss structure 902 and a vaporized heat pipe fluid (not shown). Thereby, the hollow micro-truss structure 902 serves as a condenser to condense the vaporized heat pipe fluid into a condensed refrigerant (not shown). The wick structures 904 transport the condensed refrigerant from the hollow micro-truss structure 902 back to the wick structures 904 and back to a heated area, thereby enabling continuous evaporation and, in effect, management of a heat load.

In this manner, embodiments of the disclosure provide a cost-effective fluid flow interface to a hollow porous material, which reduces discontinuities and sharp edges and consequently reduces flow disruption, reduces pressure drop for fluid flowing into the hollow porous material, and/or increases pressure recovery for fluid exiting the hollow porous material.

While at least one example embodiment has been presented in the foregoing detailed description, it should be appreciated that a vast number of variations exist. It should also be appreciated that the example embodiment or embodiments described herein are not intended to limit the scope, applicability, or configuration of the subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

The above description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although Figures 1-5 depict example arrangements of elements, additional intervening elements, devices, features, or components may be present in an embodiment of the disclosure.

Terms and phrases used in this document, and variations thereof, unless otherwise expressly stated, should be construed as open ended as opposed to limiting. As examples of the foregoing: the term "including" should be read as meaning "including, without limitation" or the like; the term "example" is used to provide exemplary instances of the item in discussion, not an exhaustive or limiting list thereof; and adjectives such as "conventional," "traditional," "normal," "standard," "known" and terms of similar meaning should not be construed as limiting the item described to a given time period or to an item available as of a given time, but instead should be read to encompass conventional, traditional, normal, or standard technologies that may be available or known now or at any time in the future. Likewise, a group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should also be read as "and/or" unless expressly stated otherwise.

Furthermore, although items, elements or components of the disclosure may be described or claimed in the singular, the plural is contemplated to be within the scope thereof unless limitation to the singular is explicitly stated. The presence of broadening words and phrases such as "one or more," "at least," "but not limited to" or other like phrases in some instances shall not be read to mean that the narrower case is intended or required in instances where such broadening phrases may be absent.

Further, even if the invention is only as defined by the scope of protection of the claims, the disclosure comprises embodiments according to the following clauses:
Clause 1. A method for operating a micro-lattice cross-flow heat exchanger for an aircraft, the method comprising: receiving a first fluid in a first aircraft fluid source inlet from a first aircraft system; receiving a second fluid in a second aircraft fluid source inlet from a second aircraft system; supporting an aviation induced structural load on a structural body forming two interpenetrating fluidically isolated volumes and comprising a plurality of hollow channels comprising a hollow three-dimensional micro-truss comprising a plurality of hollow truss elements extending along at least three directions, and a plurality of hollow nodes interpenetrated by the hollow truss elements; flowing the first fluid from the first aircraft fluid source inlet into the hollow channels through a first manifold comprising a plurality of first openings into the hollow channels; flowing the first fluid within the hollow channels; flowing the first fluid out of a second manifold comprising a plurality of second openings from the hollow channels; flowing the second fluid from the second aircraft fluid source inlet external to the hollow channels; and transferring heat between the first fluid and the second fluid via the structural body.
Clause 2. The method of clause 1, wherein the aviation structural load comprises a proof and burst load, an air pressure cycling load, a vibration load, an airframe structural support load, an inertial load, a thermal cycling load, or a combination thereof.
Clause 3. The method of clause 1, further comprising: inducing the first fluid from engine bleed air and the second fluid from engine fan air; and using the micro-lattice cross-flow heat exchanger as a pre-cooler in an aircraft cabin air conditioning and temperature control system, wherein the aviation structural load comprises a wing fairing bending load.
Clause 4. The method of clause 1, further comprising: inducing the first fluid from engine bleed air and the second fluid from ram air; and using the micro-lattice cross-flow heat exchanger in an aircraft cabin air conditioning and temperature control system, wherein the aviation structural load comprises a wing fairing bending load.
Clause 5. The method of clause 1, further comprising: inducing the first fluid from engine bleed air, wherein the second fluid comprises a refrigerant; and using the micro-lattice cross-flow heat exchanger in an aircraft cabin air conditioning and temperature control system, wherein the aviation structural load comprises a proof and burst load, and a pressure cycle load.
Clause 6. The method of clause 1, further comprising: inducing the first fluid from engine oil, wherein the second fluid comprises fan air; and using the micro-lattice cross-flow heat exchanger in an oil cooling system, wherein the aviation structural load comprises a proof and burst load, a pressure cycle load, and a vibration load.
Clause 7. The method of clause 1, further comprising: inducing the first fluid from hydraulic fluid, wherein the second fluid comprises fuel or ram air; and using the micro-lattice cross-flow heat exchanger in an oil cooling system, wherein the aviation structural load comprises a proof and burst load, a pressure cycle load, a vibration load, or a combination thereof.
Clause 8. The method of clause 1, further comprising inducing the first fluid and the second fluid from an aircraft engine bleed air, an aircraft RAM ambient air, an aircraft nitrogen enriched air cooler, a recycled aircraft cabin air, a fanned heated air from a heat generating component on an aircraft, a vaporized fluid from a heat pipe, a pumped aircraft engine oil, a pumped aircraft hydraulic fluid, a pumped aircraft gearbox oil, a pumped aircraft liquid coolant, a pumped aircraft refrigerant fluid, a coolant, or a combination thereof.
Clause 9. The method for clause 1, further comprising using the micro-lattice cross-flow heat exchanger in an aircraft nitrogen enriched air cooler, an electronics cooler, a precooler, an air conditioning pack heat exchanger, an oil cooler. a refrigeration condenser, an evaporator exchanging heat between hot and cold refrigerant and air, a hydraulic fluid heat exchanger exchanging heat between hydraulic fluid and fuel or ram air, a liquid cooling system heat exchanger which exchanges heat between liquid coolant and ram air, or a combination thereof.
Clause 10. A micro-lattice cross-flow heat exchanger for an aircraft, comprising: a first aircraft fluid source inlet operable to provide a first fluid from a first aircraft system; a second aircraft fluid source inlet operable to provide a second fluid from a second aircraft system; and a structural body operable to support aviation induced structural loads and exchange heat between the first fluid and the second fluid, and comprising a plurality of hollow channels forming two interpenetrating fluidically isolated volumes and operable for flow of the first fluid within the hollow channels and flow of the second fluid external to the hollow channels isolated from the first fluid, the hollow channels comprising a hollow three-dimensional micro-truss comprising a plurality of hollow truss elements extending along at least three directions, and a plurality of hollow nodes interpenetrated by the hollow truss elements.
Clause 11. The micro-lattice cross-flow heat exchanger of clause 10, wherein the aviation induced structural loads comprise proof and burst, air pressure cycling, vibration, airframe structural support, an inertial load, a thermal cycling load, or a combination thereof.
Clause 12. The micro-lattice cross-flow heat exchanger of clause 10, further comprising: a first manifold coupled to the first aircraft fluid source inlet and a first surface of the structural body, and comprising a plurality of first openings into the hollow channels; and a second manifold coupled to the second aircraft fluid source inlet and a second surface of the structural body, and comprising a plurality of second openings into the hollow channels.
Clause 13. The micro-lattice cross-flow heat exchanger of clause 12, wherein the first manifold and the second manifold further comprise a particulate filter.
Clause 14. The micro-lattice cross-flow heat exchanger of clause 12, wherein a cross section of each of the first openings and the second openings comprises a tapered opening, a polygon, a quadrilateral, a cross section of a hollow pyramid, or a combination thereof.
Clause 15. The micro-lattice cross-flow heat exchanger of clause 10, wherein the first fluid and the second fluid are induced from an aircraft engine bleed air, an aircraft RAM ambient air, an aircraft nitrogen enriched air cooler, a recycled aircraft cabin air, a fan heated air from a heat generating component on an aircraft, a vaporized fluid from a heat pipe, a pumped aircraft engine oil, a pumped aircraft hydraulic fluid, a pumped aircraft gearbox oil, a pumped aircraft liquid coolant, a pumped aircraft refrigerant fluid, a coolant, or a combination thereof.
Clause 16. The micro-lattice cross-flow heat exchanger of clause 10, wherein: the first fluid comprises a vaporized heat pipe fluid; the second fluid comprises a cooling fluid; the first aircraft fluid source inlet comprises a wick structure operable to retain the heat pipe fluid; and the first aircraft system comprises a heat pipe surface operable to vaporize the heat pipe fluid in response to heating of the heat pipe surface to provide the vaporized heat pipe fluid.
Clause 17. The micro-lattice cross-flow heat exchanger of clause 16, wherein the wick structure comprises, a longitudinally oriented wick structure, a laterally oriented wick structure, an omni-directionally oriented wick structure, or a combination thereof.
Clause 18. A method for configuring a micro-lattice cross-flow heat exchanger for an aircraft, the method comprising: configuring a first aircraft fluid source inlet to receive a first fluid from a first aircraft system; configuring a second aircraft fluid source inlet to receive a second fluid from a second aircraft system; configuring a plurality of hollow channels comprising hollow truss elements into a structural body comprising a hollow three-dimensional micro-truss forming two interpenetrating fluidically isolated volumes operable for the first fluid to flow within the hollow channels and the second fluid to flow external to the hollow channels isolated from the first fluid; configuring a plurality of first hollow truss elements from among the hollow truss elements to extend along a first direction; configuring a plurality of second truss hollow truss elements from among the hollow truss elements to extend along a second direction; and configuring a plurality of third truss hollow truss elements from among the hollow truss elements to extend along a third direction; interpenetrating a plurality of hollow nodes by the hollow truss elements; configuring the structural body to exchange heat between the first fluid and the second fluid; and configuring the structural body to support aviation induced structural loads.
Clause 19. The method of clause 18, wherein the aviation induced structural loads comprise: a proof and burst load, an air pressure cycling load, a vibration load, an airframe structural support load, or a combination thereof.
Clause 20. The method of clause 18, further comprising: coupling a first manifold comprising a plurality of first openings to the first aircraft fluid source inlet and a first surface of the structural body; and coupling the first openings to the hollow channels.
Clause 21. The method of clause 20, further comprising: coupling a second manifold comprising a plurality of second openings to the second aircraft fluid source inlet and a second surface of the structural body; and coupling the second openings to the hollow channels.
Clause 22. The method of clause 21, further comprising configuring a cross section of each of the first openings and the second openings to comprise a tapered opening, a polygon, a quadrilateral, a cross section of a hollow pyramid, or a combination thereof.

## Claims

1. A process (700) for operating a micro-lattice cross-flow heat exchanger (300) for an aircraft (200), the process comprising:
receiving (702) a first fluid (522) in a first aircraft fluid source inlet (548) from a first aircraft system (552);
receiving (704) a second fluid (502) in a second aircraft fluid source inlet (504) from a second aircraft system (554);
supporting (706) an aviation induced structural load on a structural body (320) forming two interpenetrating fluidically isolated volumes and comprising a plurality of hollow channels (304, 316);
flowing (708) the first fluid from the first aircraft fluid source inlet into the hollow channels through a first manifold (306);
flowing (710) the first fluid within the hollow channels;
flowing (712) the first fluid out of a second manifold (322) from the hollow channels;
flowing (714) the second fluid from the second aircraft fluid source inlet external to the hollow channels; and
transferring (716) heat between the first fluid and the second fluid via the structural body; **characterized in that** the plurality of hollow channels comprise a hollow three-dimensional micro-truss comprising a plurality of truss elements (324,326,328) extending along at least three directions (330,332,334), and a plurality of hollow nodes (302,314) interpenetrated by the hollow truss elements; **in that** the first manifold (306) comprises a plurality of first openings (308) through a first surface (512) into the hollow channels; and **in that** the second manifold (322) comprises a plurality of second openings (310) through a second surface (518) from the hollow channels.

2. The process (700) of claim 1, further comprising:
inducing (718) the first fluid (522) from engine bleed air and the second fluid (502) from engine fan air; and
using (720) the micro-lattice cross-flow heat exchanger (300) as a pre-cooler in an aircraft cabin air conditioning and temperature control system, wherein the aviation structural load comprises a wing fairing bending load.

3. The process (700) of claim 1, further comprising:
inducing (722) the first fluid (522) from engine bleed air and the second fluid (502) from ram air; and
using (724) the micro-lattice cross-flow heat exchanger (300) in an aircraft cabin air conditioning and temperature control system, wherein the aviation structural load comprises a wing fairing bending load.

4. The process (700) of claim 1, further comprising:
inducing (726) the first fluid (522) from engine bleed air, wherein the second fluid (502) comprises a refrigerant; and
using (728) the micro-lattice cross-flow heat exchanger (300) in an aircraft cabin air conditioning and temperature control system, wherein the aviation structural load comprises a proof and burst load, and a pressure cycle load.

5. The process (700) of claim 1, further comprising:
inducing (730) the first fluid (522) from engine oil, wherein the second fluid (502) comprises fan air; and
using (732) the micro-lattice cross-flow heat exchanger (300) in an oil cooling system, wherein the aviation structural load comprises a proof and burst load, a pressure cycle load, and a vibration load.

6. The process (700) of claim 1, further comprising:
inducing (734) the first fluid (522) from hydraulic fluid, wherein the second fluid (502) comprises fuel or ram air; and
using (736) the micro-lattice cross-flow heat exchanger (300) in an oil cooling system, wherein the aviation structural load comprises a proof and burst load, a pressure cycle load, a vibration load, or a combination thereof.

7. The process (700) for claim 1, wherein:
flowing (708) the first fluid into the hollow channels comprises flow the first fluid through the plurality of first openings (308) into the hollow channels, each first opening configured as a tapered shape, a funnel, or a hollow pyramid to form a smooth transition from the first manifold into the hollow truss elements; and
flowing (712) the first fluid out of a second manifold (322) comprises flow the first fluid out through the plurality of second openings (310), each second opening configured as a tapered shape, a funnel, or a hollow pyramid to form a smooth transition out of the hollow truss elements into the second manifold.

8. A micro-lattice cross-flow heat exchanger (300) for an aircraft (200), the heat exchanger comprising:
a first aircraft fluid source inlet (548) operable to provide a first fluid (522) from a first aircraft system (552);
a second aircraft fluid source inlet (504) operable to provide a second fluid (502) from a second aircraft system (554); and
a structural body (320) operable to support aviation induced structural loads and exchange heat between the first fluid and the second fluid, and comprising a plurality of hollow channels (304, 316) forming two interpenetrating fluidically isolated volumes and operable for flow of the first fluid within the hollow channels and flow of the second fluid external to the hollow channels isolated from the first fluid; **characterized in that** the hollow channels comprising a hollow three-dimensional micro-truss comprising a plurality of hollow truss elements (324, 326, 328) extending along at least three directions (330, 332, 334), and a plurality of hollow nodes (302, 314) interpenetrated by the hollow truss elements wherein each hollow truss element of the plurality of hollow truss elements (324, 326, 328) has an opening (308, 310) through a surface (512, 518) into a manifold (306, 322).

9. The micro-lattice cross-flow heat exchanger (300) of claim 8, further comprising:
a first manifold (306) coupled to the first aircraft fluid source inlet (548) and a first surface (512) of the structural body (320), and comprising a plurality of first openings (308) into the hollow channels (304, 316); and
a second manifold (322) coupled to the second aircraft fluid source inlet (504) and a second surface (518) of the structural body, and comprising a plurality of second openings (310) into the hollow channels.

10. The micro-lattice cross-flow heat exchanger (300) of claim 9, wherein the first manifold (306) and the second manifold (322) further comprise a particulate filter (336).

11. The micro-lattice cross-flow heat exchanger (300) of claim 9 or 10, wherein a cross section of each of the first openings (308) and the second openings (310) comprises a tapered opening, a cross section of a hollow pyramid, or a funnel.

12. The micro-lattice cross-flow heat exchanger (300) of claim 8, wherein:
the first fluid (522) comprises a vaporized heat pipe fluid;
the second fluid (502) comprises a cooling fluid;
the first aircraft fluid source inlet (548) comprises a wick structure (816, 818, 820, 822) operable to retain the heat pipe fluid; and
the first aircraft system (552) comprises a heat pipe surface operable to vaporize the heat pipe fluid in response to heating of the heat pipe surface to provide the vaporized heat pipe fluid.

13. The micro-lattice cross-flow heat exchanger (300) of claim 12, wherein the wick structure (816, 818, 820, 822) comprises, a longitudinally oriented wick structure, a laterally oriented wick structure, an omni-directionally oriented wick structure, or a combination thereof.

14. The micro-lattice cross-flow heat exchanger (300) of any of claims 9-13, wherein the hollow channels (304, 316) each have a cross-sectional shape that is elliptical.

## Patentansprüche

1. Verfahren (700) zum Betreiben eines Mikrogitter-Kreuzstrom-Wärmetauschers (300) für ein Luftfahrzeug (200), wobei das Verfahren umfasst:
Aufnehmen (702) eines ersten Fluids (522) in einem ersten Luftfahrzeugfluidquelleneinlass (548) von einem ersten Luftfahrzeugsystem (552);
Aufnehmen (704) eines zweiten Fluids (502) in einem zweiten Luftfahrzeugfluidquelleneinlass (504) von einem zweiten Luftfahrzeugsystem (554);
Aufnehmen (706) einer durch einen Flugbetrieb induzierten strukturellen Belastung auf einen Baukörper (320), der zwei sich gegenseitig durchdringende, fluidisch isolierte Volumina bildet und mehrere Hohlkanälen (304, 316) aufweist;
Strömenlassen (708) des ersten Fluids aus dem ersten Luftfahrzeugfluidquelleneinlass durch einen ersten Verteiler (306) in die Hohlkanäle;
Strömenlassen (710) des ersten Fluids innerhalb der Hohlkanäle; Strömenlassen (712) des ersten Fluids von den Hohlkanälen aus einem zweiten Verteiler (322);
Strömenlassen (714) des zweiten Fluids aus dem zweiten Luftfahrzeugfluidquelleneinlass außerhalb der Hohlkanäle; und
Übertragen (716) von Wärme zwischen dem ersten Fluid und dem zweiten Fluid über den Baukörper;
**dadurch gekennzeichnet, dass** die mehreren Hohlkanäle ein hohles dreidimensionales Mikrogerüst, das mehrere Gerüstelemente (324, 326, 328) aufweist, die sich entlang von zumindest drei Richtungen (330, 332, 334) erstrecken, und mehrere Hohlknoten (302, 314) umfassen, die von den hohlen Gerüstelementen durchsetzt werden; dadurch, dass der erste Verteiler (306) mehrere erste Öffnungen (308) in die Hohlkanäle durch eine erste Oberfläche (512) hindurch aufweist; und dadurch, dass der zweite Verteiler (322) mehrere zweite Öffnungen (310) aus den Hohlkanälen durch eine zweite Oberfläche (518) hindurch aufweist.

2. Verfahren (700) nach Anspruch 1, das ferner umfasst:
Einleiten (718) des ersten Fluids (522) aus einer Triebwerkszapfluft und des zweiten Fluids (502) von einer Triebwerksgebläseluft; und
Verwenden (720) des Mikrogitter-Kreuzstrom-Wärmetauschers (300) als Vorkühler in einem Luftfahrzeugkabinenluftklimatisierungs- und -temperaturregelsystem, wobei die flugbedingte strukturelle Belastung eine Tragflächenverkleidungsbiegebelastung umfasst.

3. Verfahren (700) nach Anspruch 1, das ferner umfasst:
Einleiten (722) des ersten Fluids (522) aus einer Triebwerkszapfluft und des zweiten Fluids (502) von einer Stauluft; und
Verwenden (724) des Mikrogitter-Kreuzstrom-Wärmetauschers (300) in einem Luftfahrzeugkabinenluftklimatisierungs- und -temperaturregelsystem, wobei die flugbedingte strukturelle Belastung eine Tragflächenverkleidungsbiegebelastung umfasst.

4. Verfahren (700) nach Anspruch 1, das ferner umfasst:
Einleiten (726) des ersten Fluids (522) aus einer Triebwerkszapfluft, wobei das zweite Fluid (502) ein Kältemittel aufweist; und
Verwenden (728) des Mikrogitter-Kreuzstrom-Wärmetauschers (300) in einem Luftfahrzeugkabinenluftklimatisierungs- und -temperaturregelsystem, wobei die flugbedingte strukturelle Belastung eine Test- und Berstbelastung und eine zyklische Druckbelastung umfasst.

5. Verfahren (700) nach Anspruch 1, das ferner umfasst:
Einleiten (730) des ersten Fluids (522) von einem Motorenöl, wobei das zweite Fluid (502) Gebläseluft umfasst; und
Verwenden (732) des Mikrogitter-Kreuzstrom-Wärmetauschers (300) in einem Ölkühlungssystem, wobei die flugbedingte strukturelle Belastung eine Test- und Berstbelastung, eine zyklische Druckbelastung und eine Vibrationsbelastung umfasst.

6. Verfahren (700) nach Anspruch 1, das ferner umfasst:
Einleiten (734) des ersten Fluids (522) aus Hydraulikfluid, wobei das zweite Fluid (502) Treibstoff oder Stauluft umfasst; und
Verwenden (736) des Mikrogitter-Kreuzstrom-Wärmetauschers (300) in einem Ölkühlungssystem, wobei die flugbedingte strukturelle Belastung eine Test- und Berstbelastung, eine zyklische Druckbelastung, eine Vibrationsbelastung oder eine Kombination hiervon umfasst.

7. Verfahren (700) nach Anspruch 1, wobei:
ein Strömenlassen (708) des ersten Fluids in die Hohlkanäle ein Strömenlassen des ersten Fluids durch die mehreren ersten Öffnungen (308) in die Hohlkanäle umfasst, wobei jede erste Öffnung als sich verjüngende Form, als Trichter oder als Hohlpyramide ausgebildet ist, um einen glatten Übergang von dem ersten Verteiler in die hohlen Gerüstelemente zu schaffen; und
ein Strömenlassen (712) des ersten Fluids aus einem zweiten Verteiler (322) ein Herausströmen des ersten Fluids durch die mehreren zweiten Öffnungen (310) umfasst, wobei jede zweite Öffnung als sich verjüngende Form, als Trichter oder als Hohlpyramide ausgebildet ist, um einen glatten Übergang aus den hohlen Gerüstelementen in den zweiten Verteiler zu schaffen.

8. Mikrogitter-Kreuzstrom-Wärmetauscher (300) für ein Luftfahrzeug (200), wobei der Wärmetauscher aufweist:
einen ersten Luftfahrzeugfluidquelleneinlass (548), der betrieben werden kann, um ein erstes Fluid (522) von einem ersten Luftfahrzeugsystem (552) bereitzustellen;
einen zweiten Luftfahrzeugfluidquelleneinlass (504), der betrieben werden kann, um ein zweites Fluid (502) von einem zweiten Luftfahrzeugsystem (554) bereitzustellen; und
einen Baukörper (320), der betrieben werden kann, um durch einen Flugbetrieb induzierte strukturelle Belastungen aufzunehmen und Wärme zwischen dem ersten Fluid und dem zweiten Fluid auszutauschen, der mehrere Hohlkanäle (304, 316) aufweist, der zwei sich gegenseitig durchdringende, fluidisch isolierte Volumina bildet und betrieben werden kann, um das erste Fluid innerhalb der Hohlkanäle strömen zu lassen und das zweite Fluid isoliert von dem ersten Fluid außerhalb der Hohlkanäle strömen zu lassen, **dadurch gekennzeichnet, dass** die Hohlkanäle ein hohles dreidimensionales Mikrogerüst, das mehrere Gerüstelemente (324, 326, 328) aufweist, die sich entlang von zumindest drei Richtungen (330, 332, 334) erstrecken, und mehrere Hohlknoten (302, 314) umfassen, die von den hohlen Gerüstelementen durchsetzt werden, wobei jedes hohle Gerüstelements der mehreren hohlen Gerüstelemente (324, 326, 328) eine Öffnung (308, 310) durch eine Oberfläche (512, 518) in einen Verteiler (306, 322) hinein aufweist.

9. Mikrogitter-Kreuzstrom-Wärmetauscher (300) nach Anspruch 8, der ferner aufweist:
einen ersten Verteiler (306), der an den ersten Luftfahrzeugfluidquelleneinlass (548) und eine erste Oberfläche (512) des Baukörpers (320) gekoppelt ist, und mehrere erste Öffnungen (308) in die Hohlkanäle (304, 316) hinein aufweist; und
einen zweiten Verteiler (322), der an den zweiten Luftfahrzeugfluidquelleneinlass (504) und eine zweite Oberfläche (518) des Baukörpers gekoppelt ist, und mehrere zweite Öffnungen (310) in die Hohlkanäle hinein aufweist.

10. Mikrogitter-Kreuzstrom-Wärmetauscher (300) nach Anspruch 9, wobei der erste Verteiler (306) und der zweite Verteiler (322) ferner einen Partikelfilter (336) aufweisen.

11. Mikrogitter-Kreuzstrom-Wärmetauscher (300) nach Anspruch 9 oder 10, wobei ein Querschnitt der ersten Öffnungen (308) und der zweiten Öffnungen (310) jeweils eine sich verjüngende Öffnung, einen Querschnitt einer Hohlpyramide oder eines Trichters aufweist.

12. Mikrogitter-Kreuzstrom-Wärmetauscher (300) nach Anspruch 8, wobei:
das erste Fluid (522) ein verdampftes Wärmerohrfluid umfasst; das zweite Fluid (502) ein Kühlfluid umfasst;
der erste Luftfahrzeugfluidquelleneinlass (548) eine Kapillarstruktur (816, 818, 820, 822) aufweist, die zum Aufnehmen des Wärmerohrfluids betrieben werden kann; und
das erste Luftfahrzeugsystem (552) eine Wärmerohroberfläche aufweist, die betrieben werden kann, das Wärmerohrfluid in Reaktion auf ein Erhitzen der Wärmerohroberfläche zu verdampfen, um das verdampfte Wärmerohrfluid zu bilden.

13. Mikrogitter-Kreuzstrom-Wärmetauscher (300) nach Anspruch 12, wobei die Kapillarstruktur (816, 818, 820, 822) eine in Längsrichtung orientierte Kapillarstruktur, eine lateral orientierte Kapillarstruktur, eine in alle Richtungen orientierte Kapillarstruktur oder eine Kombination hiervon umfasst.

14. Mikrogitter-Kreuzstrom-Wärmetauscher (300) nach einem der Ansprüche 9 bis 13, wobei die Hohlkanäle (304, 316) jeweils eine elliptische Querschnittsform aufweisen.

## Revendications

1. Procédé (700) de fonctionnement d'un échangeur de chaleur à écoulement transversal et à micro-treillis (300) pour un avion (200), le procédé comprenant :
la réception (702) d'un premier fluide (522) dans une première entrée de source de fluide d'avion (548) en provenance d'un premier système d'avion (552) ;
la réception (704) d'un second fluide (502) dans une seconde entrée de source de fluide d'avion (504) en provenance d'un second système d'avion (554) ;
l'appui (706) d'une charge structurelle induite par l'aviation sur un corps structurel (320) formant deux volumes interpénétrants isolés fluidiquement et comprenant une pluralité de canaux creux (304, 316) ;
l'écoulement (708) du premier fluide provenant de la première entrée de source de fluide d'avion dans les canaux creux au travers d'un premier collecteur (306) ;
l'écoulement (710) du premier fluide à l'intérieur des canaux creux ;
l'écoulement (712) du premier fluide sortant d'un second collecteur (322) en provenance des canaux creux ;
l'écoulement (714) du second fluide provenant de la seconde entrée de source de fluide d'avion à l'extérieur des canaux creux ; et
le transfert (716) de chaleur entre le premier fluide et le second fluide via le corps structurel ;
**caractérisé en ce que** la pluralité de canaux creux comprennent une micro-armature tridimensionnelle creuse comprenant une pluralité d'éléments d'armature (324, 326, 328) s'étendant le long d'au moins trois directions (330, 332, 334) et une pluralité de noeuds creux (302,314) interpénétrés par les éléments d'armature creux ; et **en ce que** le premier collecteur (306) comprend une pluralité de premières ouvertures (308) à travers une première surface (512) vers les canaux creux ; et **en ce que** le second collecteur (322) comprend une pluralité de secondes ouvertures (310) à travers une seconde surface (518) depuis les canaux creux ;

2. Procédé (700) selon la revendication 1, comprenant en outre :
l'induction (718) du premier fluide (522) à partir d'air de prélèvement réacteur et du second fluide (502) à partir d'air de soufflante de réacteur ; et
l'utilisation (720) de l'échangeur de chaleur à écoulement transversal et à micro-treillis (300) comme pré-refroidisseur dans un système de climatisation et de commande de température de cabine d'avion, dans lequel la charge structurelle d'aviation comprend une charge de flexion sur le carénage d'emplanture d'aile.

3. Procédé (700) selon la revendication 1, comprenant en outre :
l'induction (722) du premier fluide (522) à partir d'air de prélèvement réacteur et du second fluide (502) à partir d'air dynamique ; et
l'utilisation (724) de l'échangeur de chaleur à écoulement transversal et à micro-treillis (300) dans un système de climatisation et de commande de température de cabine d'avion, dans lequel la charge structurelle d'aviation comprend une charge de flexion sur le carénage d'emplanture d'aile.

4. Procédé (700) selon la revendication 1, comprenant en outre :
l'induction (726) du premier fluide (522) à partir d'air de prélèvement réacteur, dans lequel le second fluide (502) comprend un fluide frigorigène ; et
l'utilisation (728) de l'échangeur de chaleur à écoulement transversal et à micro-treillis (300) comme pré-refroidisseur dans un système de climatisation et de commande de température de cabine d'avion, dans lequel la charge structurelle d'aviation comprend une charge d'épreuve et d'éclatement, et une charge de cycle de pression.

5. Procédé (700) selon la revendication 1, comprenant en outre :
l'induction (730) du premier fluide (522) à partir d'huile réacteur, dans lequel le second fluide (502) comprend de l'air de soufflante ; et
l'utilisation (732) de l'échangeur de chaleur à écoulement transversal et à micro-treillis (300) dans un système de refroidissement d'huile, dans lequel la charge structurelle d'aviation comprend une charge d'épreuve et d'éclatement, une charge de cycle de pression et une charge vibratoire.

6. Procédé (700) selon la revendication 1, comprenant en outre :
l'induction (734) du premier fluide (522) à partir de fluide hydraulique, dans lequel le second fluide (502) comprend du carburant ou de l'air dynamique ; et
l'utilisation (736) de l'échangeur de chaleur à écoulement transversal et à micro-treillis (300) dans un système de refroidissement d'huile, dans lequel la charge structurelle d'aviation comprend une charge d'épreuve et d'éclatement, une charge de cycle de pression, une charge vibratoire ou une combinaison de ces différentes charges.

7. Procédé (700) selon la revendication 1, dans lequel :
l'écoulement (708) du premier fluide dans les canaux creux comprend l'écoulement du premier fluide à travers la pluralité de premières ouvertures (308) dans les canaux creux, chaque première ouverture se présentant sous une forme conique, en entonnoir ou en pyramide creuse pour former un passage en douceur du premier collecteur aux éléments d'armature creux ; et
l'écoulement (712) du premier fluide sortant d'un second collecteur (322) comprend l'écoulement du premier fluide sortant à travers la pluralité de secondes ouvertures (310), chaque seconde ouverture se présentant sous une forme conique, en entonnoir ou en pyramide creuse pour former un passage en douceur pour sortir des éléments d'armature creux et entrer dans le second collecteur.

8. Echangeur de chaleur à écoulement transversal et à micro-treillis (300) pour un avion (200), l'échangeur de chaleur comprenant :
une première entrée de source de fluide d'avion (548) utilisable pour fournir un premier fluide (522) à partir d'un premier système d'avion (552) ;
une seconde entrée de source de fluide d'avion (504) utilisable pour fournir un second fluide (502) à partir d'un second système d'avion (554) ; et
un corps structurel (320) utilisable pour supporter des charges structurelles induites par l'aviation et pour échanger de la chaleur entre le premier fluide et le second fluide, et comprenant une pluralité de canaux creux (304, 316) formant deux volumes interpénétrants isolés fluidiquement et utilisables pour l'écoulement du premier fluide à l'intérieur des canaux creux et l'écoulement du second fluide à l'extérieur des canaux creux, isolé du premier fluide ; **caractérisé en ce que** les canaux creux comprennent une micro-armature tridimensionnelle creuse comprenant une pluralité d'éléments d'armature (324, 326, 328) s'étendant le long d'au moins trois directions (330, 332, 334), et une pluralité de noeuds creux (302, 314) interpénétrés par les éléments d'armature creux dans lequel chaque élément armature creux de la pluralité d'éléments d'armature (324, 326, 328) possède une ouverture (308, 310) à travers une surface (512, 518) vers un collecteur (306, 322).

9. Echangeur de chaleur à écoulement transversal et à micro-treillis (300) selon la revendication 8, comprenant en outre
un premier collecteur (306) couplé à la première entrée de source de fluide d'avion (548) et à une première surface (512) du corps structurel (320), et comprenant une pluralité de premières ouvertures (308) vers les canaux creux (304, 306) ; et
un second collecteur (322) couplé à la seconde entrée de source de fluide d'avion (504) et à une seconde surface (518) du corps structurel, et comprenant une pluralité de secondes ouvertures (310) vers les canaux creux.

10. Echangeur de chaleur à écoulement transversal et à micro-treillis (300) selon la revendication 9, dans lequel le premier collecteur (306) et le second collecteur (322) comprennent en outre un filtre à particules (336).

11. Echangeur de chaleur à écoulement transversal et à micro-treillis (300) selon la revendication 9 ou 10, dans lequel une section transversale de chacune des premières ouvertures (308) et des secondes ouvertures (310) comprend une ouverture conique, une section transversale d'une pyramide creuse, ou un entonnoir.

12. Echangeur de chaleur à écoulement transversal et à micro-treillis (300) selon la revendication 8, dans lequel :
le premier fluide (522) comprend un fluide de caloduc vaporisé ;
le second fluide (502) comprend un fluide de refroidissement ;
la première entrée de source de fluide d'avion (548) comprend une structure de mèches (816, 818, 820, 822) utilisable pour retenir le fluide de caloduc ; et
le premier système d'avion (552) comprend une surface de caloduc utilisable pour vaporiser le fluide de caloduc en réponse au chauffage de la surface de caloduc pour fournir le fluide de caloduc vaporisé.

13. Echangeur de chaleur à écoulement transversal et à micro-treillis (300) selon la revendication 12, dans lequel la structure de mèches (816, 818, 820, 822) comprend une structure de mèches orientée longitudinalement, une structure de mèches orientée latéralement, une structure de mèches orientée de façon omnidirectionnelle, ou une combinaison de ces différentes structures.

14. Echangeur de chaleur à écoulement transversal et à micro-treillis (300) selon l'une quelconque des revendications 9 à 13, dans lequel les canaux creux (304, 316) ont chacun une forme de section transversale qui est elliptique.
